(19) Europäisches Patentamt / European Patent Office / Office européen des brevets

(11) **EP 4 023 388 A1**

(12) **EUROPEAN PATENT APPLICATION**

(43) Date of publication:
06.07.2022 Bulletin 2022/27

(21) Application number: 21213802.8

(22) Date of filing: 10.12.2021

(51) International Patent Classification (IPC):
*B23K 26/14* (2014.01)

(52) Cooperative Patent Classification (CPC):
B23K 26/14

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.12.2020 US 202017136105

(71) Applicant: L'AIR LIQUIDE, SOCIETE ANONYME
POUR L'ETUDE ET
L'EXPLOITATION DES PROCEDES GEORGES
CLAUDE
75007 Paris (FR)

(72) Inventor: CARISTAN, Charles
NEWARK, 19702 (US)

(74) Representative: Air Liquide
L'Air Liquide S.A.
Direction de la Propriété Intellectuelle
75, Quai d'Orsay
75321 Paris Cedex 07 (FR)

(54) **DONUT KEYHOLE LASER CUTTING**

(57)    A method of combined laser and oxy-cutting, including heating an area of the material to be cut to an enabling temperature range with a laser beam and introducing an oxygen stream into the heated area, thus cutting the material. Wherein the laser beam is directed in a periodic path.

Figure 1

## Description

### Background

In the metalworking industry, thermal cutting processes such as laser cutting, plasma cutting and oxy-fuel cutting are often the most economical means available. Typically, they are suitable for preparing weld edges, for cutting component geometries, or for cutting pipes and profiles. All these thermal cutting processes utilize a concentrated high-energy heat source. And for all these processes the cutting speed decreases with increasing sheet thickness.

Laser cutting has gained in popularity but is limited when it comes to maximum thickness of metal cutting capability, typically of the order of 1 to 1.5 inch depending of laser power. This is in contrast with these other methods such as plasma cutting (up to 2 inch) and oxy-fuel cutting (12 inch thick steel slab is not uncommon). Abrasive water-jet are also common, and can cut up to 8 inch.

To increase the thickness capability, the laser industry has typically relied on simply increasing laser power. And still, even with a 12kW laser power, can barely pass the 2 inch steel thickness cutting capability.

Alternatively, the industry has tried with the so-called LASOX process. This process consists of focusing the laser beam spot into a large spot on the workpiece, with enough energy density to heat it in conduction mode beyond 900C. At these temperatures the oxy-cutting process is enabled by the exothermic oxidation of the metal which melts away due to an $O_2$ flow, which creates the cut kerf.

While the laser is being used as a heat source, the cutting speed is being dictated mainly by the oxy-cutting process. Consequently, this method is more expensive in $/inch than the traditional oxy-fuel heating. This method is also challenged by difficulties in piercing and spatter projections on the optics. Another known method is where the laser beam is focused into a large ring mode spot on the workpiece. This ring spot is intended to be large enough to have the $O_2$ flow blowing through the inner ring. This method leaves the focused spot operating in conduction mode to heat up the workpiece above 900 C so the oxy-cutting process can be enabled. In conduction mode, the cutting speed is again being dictated solely by the oxy-cutting process. A mechanical mean to get a focus spot to oscillate in periodic loop patterns has been utilized, however the requirement on keyhole mode across the closed pattern area has not been specified.

### Summary

A method of combined laser and oxy-cutting, including heating an area of the material to be cut to an enabling temperature range with a laser beam and introducing an oxygen stream into the heated area, thus cutting the material. Wherein the laser beam is directed in a periodic path.

### Brief Description of the Figures

For a further understanding of the nature and objects for the present invention, reference should be made to the following detailed description, taken in conjunction with the accompanying drawings, in which like elements are given the same or analogous reference numbers and wherein:

Figure 1 is a schematic representation a donut keyhole laser cutting, in accordance with one embodiment of the present invention.

Figure 2a is a schematic representation of a non-circular periodic loop pattern, in accordance with one embodiment of the present invention.

Figure 2b is a schematic representation of a non-circular periodic loop pattern in linear translation, in accordance with one embodiment of the present invention.

Figure 3a is a schematic representation of an open donut periodic loop pattern, in accordance with one embodiment of the present invention.

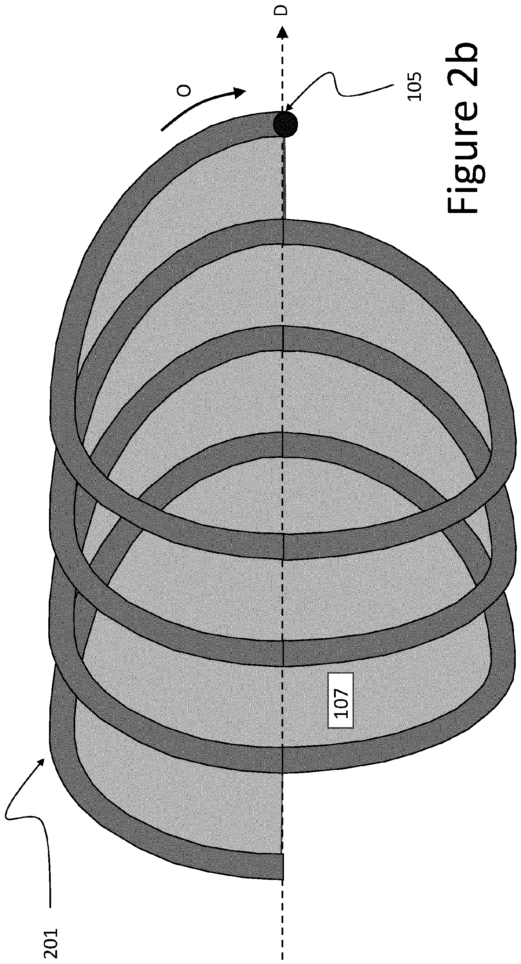

Figure 2b is a schematic representation of an open donut periodic loop pattern in linear translation, in accordance with one embodiment of the present invention.

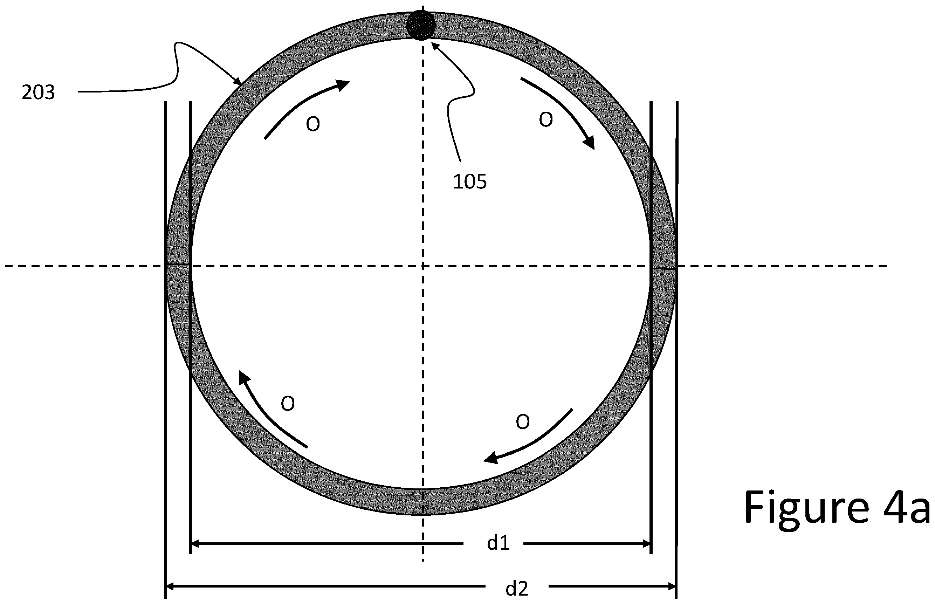

Figure 4a is a schematic representation of circular periodic loop pattern, in accordance with one embodiment of the present invention.

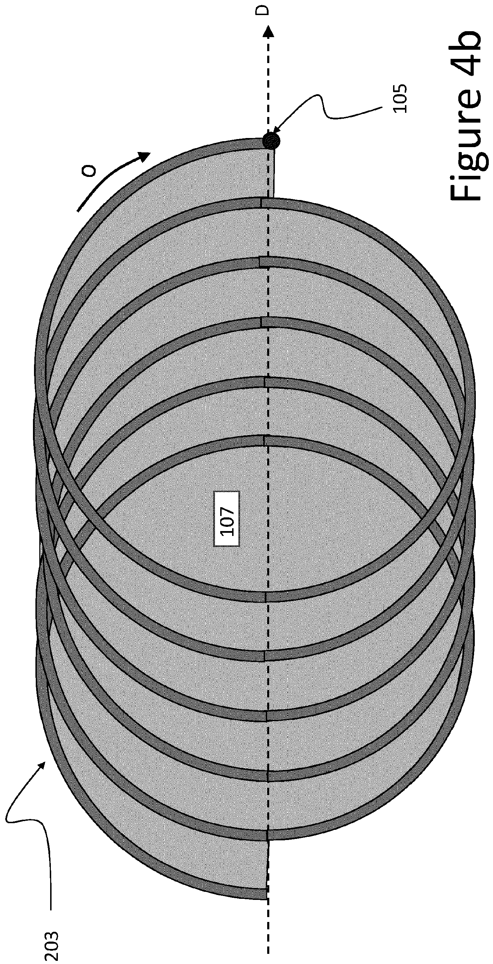

Figure 4b is a schematic representation of circular periodic loop pattern in linear translation, in accordance with one embodiment of the present invention.

### Element Numbers

[0008]

101 = cutting nozzle
102 = cutting gas flow
103 = material to be cut
104 = laser beam
105 = focused laser beam spot
107 = heat irradiation zone
200 = period loop pattern
201 = non-circular periodic loop pattern
202 = open donut periodic loop pattern
203 = circular periodic loop pattern

### Description of Preferred Embodiments

Illustrative embodiments of the invention are described below. While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present method utilizes the so-called LASOX principle, wherein the workpiece must be heated above a temperature of about 900-1000 C in order for the oxy-cutting process to be enabled. However, in the instant case, this is not achieved by focusing the laser beam into a very large spot or ring spot and heating the plate in conduction mode. Instead the present method utilizes a focused laser beam focused onto a tiny spot, thus creating a power density above the keyhole mode threshold of approximately 0.5MW/cm2 at 1 micron wavelength. This focused spot also oscillates in a periodic pattern. This period pattern may be a circular or semi-circular closed loop patterns or similar open loop patterns. The focused spot oscillates at a high frequency of at least 0.5kHz per each MW/cm2 of average power density in the area swept by the periodic loop pattern. This is to be done in such a way that the average power density of the area swept by the periodic loop pattern remains above keyhole threshold of about 0.5MW/cm2.

The present method optimizes the maximum thickness capability of a laser cutting system by focusing the laser beam into a minuscule focused spot of diameter (d2-d1)/2. The focused spot may have a diameter of less than about 150 micron. The spot may be produced with a relatively long focal length focusing optic. The focusing optic may be more than 200mm, preferably more than 300 mm. The focused spot may be oscillated at high speed across a periodic loop pattern irradiation area. This oscillation may be greater than 1 kHz; the faster the cutting speed, the greater the oscillation frequency should be. If the periodic loop pattern is for circular, then a circle of diameter d2 of between 1 to 3 or 4 mm (depending on thickness of the workpiece to be cut) is representative. Or if the focused spot is oscillated into a non-circular periodic loop pattern, it is even more efficient and achievable mechanically with galvano-mirrors or by other optical mean or electronic mean. This method remedies the primary deficiency of the existing so-called LASOX process. This method allows the cutting of a very thick plate with O2 assist gas. In fact, this method allows plates to be cut that are essentially as thick as with oxy-fuel cutting. The preferred orientation is to have the assist gas and the focused laser beam being delivered coaxially onto the workpiece through a common nozzle delivery. At the high frequency of motion oscillation of the tiny focused spot beam, the average power density received by the workpiece from the donut ring is also above the threshold for keyhole. This enables the laser to heat up the part of the workpiece in the inner part of the donut, while actually initiating the cut in keyhole mode in the ring of the donut itself. The beam oscillation in the donut keyhole ring area can be achieved mechanically by stirring optics at high frequency, optically or electronically by controlling the laser resonator.

The following equations define the present system.

Wherein:

d1 = the inside diameter of the ring spot (see Figures) (Preferably d1 > 0.1 mm)
d2 = the outside diameter of the ring spot (see Figures)

$$D = (d2 - d1) / 2$$

f = the focal length of the system (Preferably f > 200 mm)
$M^2$ = the laser beam quality factor
$\lambda$ = the wavelength of the laser
P = the power of the laser
$P_d$ = the power density of the focused beam spot
$P_a$ = average power density inside of ring

$$D \sim M^2 * \lambda * f / (\pi * D)$$

$$P_d = P / (\pi * D^2/4) > 0.5 \text{ MW/cm2}$$

(Preferably $P_d$ > 5 MW/cm2

$$P_a = P/[((\pi * d2^2) / 4) - ((\pi * d1^2) / 4)]$$

(Preferably Pa > 0.5 MW/cm2)

Among the advantages of the present method over the existing art are the following. The long focal length for focusing the optic protects the optics from welding spatters. The long focal length yields a long Rayleigh length (Zr), thus providing better cutting quality during thick workpiece cutting. The keyhole mode in the donut area enables deep penetration cutting much faster while heating the workpiece much more efficiently. The hole in the donut area determines the kerf width; by enabling a large kerf of 1 to 2 mm, it enables a more effective flow of assist gas deep inside the kerf. Deep oxy-cutting with Oxygen assist gas and clean dross-free cutting with Nitrogen assist gas.

With the same laser machine and a simple focusing head retrofit for the present donut keyhole laser cutting, the end-user customer can cut much thicker plate, much faster than with oxy-fuel. Compared to traditional laser cutting, the cutting quality is superior because of much better assist gas flow in the wider kerf. The cutting speed is enhanced compared to traditional laser cutting.

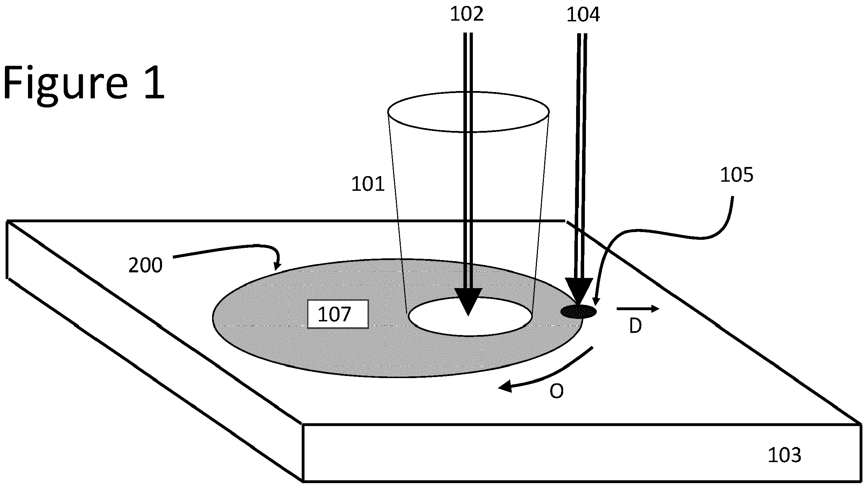

Turning to Figures 1-4b, a method of donut keyhole laser cutting is provided. A typical cutting nozzle **101** directs a cutting gas flow **102** to the surface of the material to be cut **103.** Cutting gas **102** may be oxygen. A laser beam **104** is directed to form a focused spot **105.** Focused spot **105** is directed in a period loop pattern **200,** thus creating a heated irradiation zone **107.** The heated irradiation zone **107** will reach temperatures near the ignition temperature, typically above 900 to 1000 C. When contacted with the cutting gas **102,** the metal in the heated irradiation zone **107** will vaporize and create a hole in the material to be cut **103.** As the laser beam **104** continues to oscillate around the period loop pattern **200,** the cutting nozzle **101,** and thus the cutting gas **102,** move in a linear direction D across the material to be cut **103.**

The heated irradiation zone **107** may have a power density above the keyhole mode threshold of 0.5MW/cm2 at 1 micron wavelength. This allows the material to be cut **103** to boil and form a vapor column. A laser beam keyhole is thus formed, which penetrates the material to be cut, and is surrounded by molten material. As the cutting nozzle **101,** and thus the cutting gas **102,** move across the material to be cut **103,** the keyhole, and the resulting penetration, move with it, thus, effectuating the cutting of the material to be cut **103.**

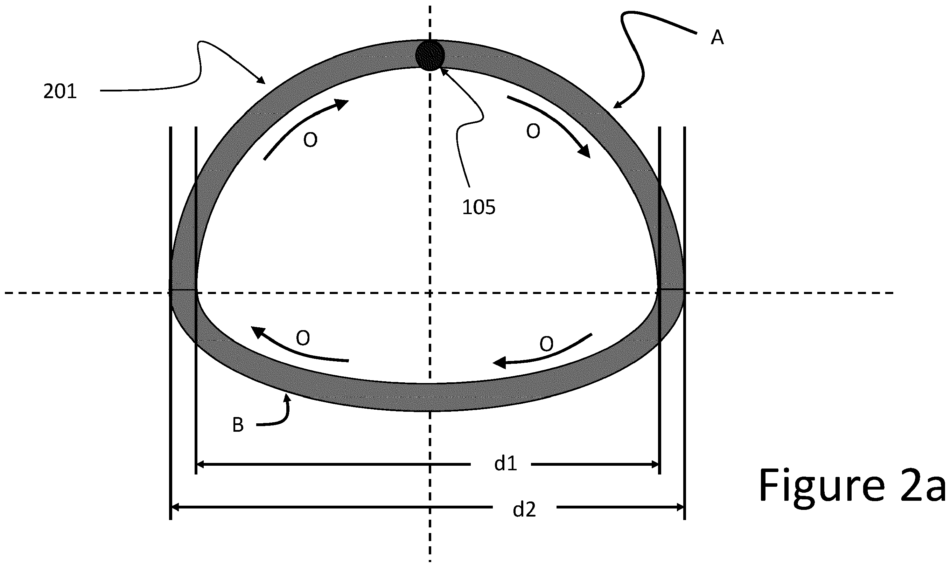

The periodic loop pattern may be of any practical shape available to the skilled artisan. As a non-limiting example, the periodic loop pattern may be non-circular **201** as indicated in Figures 2a and 2b. Although the oscillation direction **O** is indicated in the figures as being in the clockwise direction, the direction of the oscillation **O** may be either clockwise, counterclockwise, or may alternate between the two. This oscillation pattern can be asymmetrical, as in Figure 2b, the portion **A** of the pattern which is more approximately circular is oriented in the leading direction. As for any given period, focused spot **105** will be in contact with the material to be cut longer in portion **A** than in portion **B** (the less approximately circular portion), this orientation provides maximum laser power to the heat effected zone **107.** However, one skilled in the art may orient the non-circular periodic loop pattern **201** in the manner most suitable for the application.

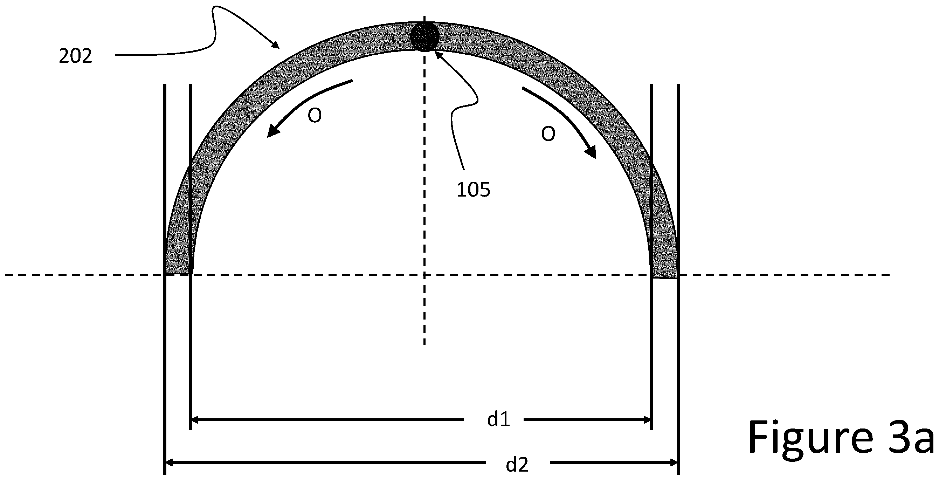

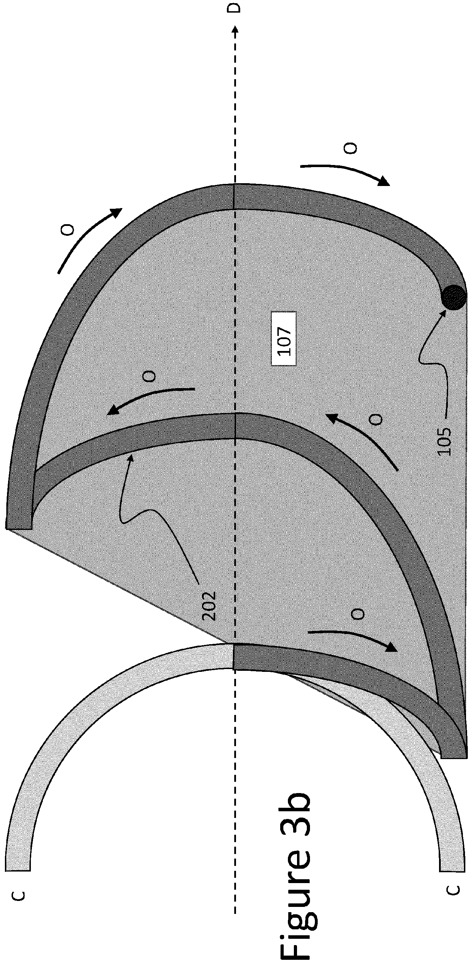

As another non-limiting example, may be a circular (semi-circular) or non-circular open donut **202** as indicated in Figure 3. The direction of the oscillation **O** may be either clockwise, counter-clockwise, or may alternate between the two. This oscillation pattern introduces and concentrates laser power to the leading edge of heat effected zone **107** only. Thus, with all things being equal, may result in either increased cutting depth potential or increased cutting speed.

As yet another non-limiting example, may be a circular donut **203** as indicated in Figure 4. The direction of the oscillation **O** may be either clockwise, counter-clockwise, or may alternate between the two. This oscillation pattern produces a more evenly distributed heated irradiation zone **107,** and thus may be of more general application.

It will be understood that many additional changes in the details, materials, steps and arrangement of parts, which have been herein described in order to explain the nature of the invention, may be made by those skilled in the art within the principle and scope of the invention as expressed in the appended claims. Thus, the present invention is not intended to be limited to the specific embodiments in the examples given above.

## Claims

1. A method of combined laser and oxy-cutting, comprising heating an area of the material to be cut to an enabling temperature range with a laser beam and introducing an oxygen stream into the heated area, thus cutting the material,
   wherein the laser beam is directed in a periodic path.

2. The method of claim 1, wherein the enabling temperature is above 900 C.

3. The method of claim 1, wherein the enabling temperature is above 1000 C.

4. The method of claim 1, wherein the laser beam produces an average power density in the area of the material to be cut of more than 0.5 MW / cm$^2$.

5. The method of claim 4, wherein the laser beam proceeds along the periodic curved path producing a swept area, wherein the laser beam oscillates at a frequency of greater than 0.5 kHz per each MW / cm$^2$ of average power density in the swept area.

6. The method of claim 1, wherein the laser beam is focused on the material to be cut with a focusing optic having a focal length of greater than 200 mm.

7. The method of claim 1, wherein the laser beam is focused on the material to be cut with a focusing optic having a focal length of greater than 300 mm.

8. The method of claim 1, wherein the average power density in the area of the material to be cut is above the threshold for keyhole mode laser processing.

Figure 1

Figure 2a

EP 4 023 388 A1

Figure 2b

EP 4 023 388 A1

Figure 3a

Figure 3b

Figure 4a

Figure 4b

Europäisches
Patentamt

European
Patent Office

Office européen
des brevets

# EUROPEAN SEARCH REPORT

Application Number

EP 21 21 3802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 245844 B2 (NIPPON STEEL CORP) 24 July 2013 (2013-07-24) * claims 1-5 * * figures 4, 5, 6 * * paragraphs [0011], [0030], [0035] * | 1-8 | INV. B23K26/14 |
| X | JP 2020 066011 A (AMADA HOLDINGS CO LTD) 30 April 2020 (2020-04-30) * claims 1-6 * * figures 4A-4E, 5 * | 1-8 | |
| X | JP 2005 279730 A (NIPPON STEEL CORP) 13 October 2005 (2005-10-13) * figures 2-5 * * claims 1-8 * * paragraphs [0003], [0020] * | 1-8 | |
| X | WO 2019/176632 A1 (AMADA HOLDINGS CO LTD [JP]) 19 September 2019 (2019-09-19) * paragraphs [0020] - [0022]; claims 1-6; figures 2A-2C * | 1-8 | |
| X | JP H07 236987 A (MITSUBISHI ELECTRIC CORP) 12 September 1995 (1995-09-12) * claims 1-16; figures 8, 11 * | 1-8 | TECHNICAL FIELDS SEARCHED (IPC) B23K |
| X | JP H11 156579 A (AMADA CO LTD) 15 June 1999 (1999-06-15) * paragraph [0092]; claims 1-24; figures 5, 7 * | 1-8 | |

The present search report has been drawn up for all claims

| Place of search | Date of completion of the search | Examiner |
|---|---|---|
| The Hague | 12 May 2022 | Pircher, Ernst |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 3802

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2022

| Patent document cited in search report | | Publication date | Patent family member(s) | | Publication date |
|---|---|---|---|---|---|
| JP 5245844 | B2 | 24-07-2013 | JP | 5245844 B2 | 24-07-2013 |
| | | | JP | 2010162561 A | 29-07-2010 |
| JP 2020066011 | A | 30-04-2020 | CN | 112912201 A | 04-06-2021 |
| | | | EP | 3871825 A1 | 01-09-2021 |
| | | | JP | 6636115 B1 | 29-01-2020 |
| | | | JP | 2020066011 A | 30-04-2020 |
| | | | US | 2021339342 A1 | 04-11-2021 |
| | | | WO | 2020085073 A1 | 30-04-2020 |
| JP 2005279730 | A | 13-10-2005 | NONE | | |
| WO 2019176632 | A1 | 19-09-2019 | EP | 3766629 A1 | 20-01-2021 |
| | | | JP | 7012820 B2 | 28-01-2022 |
| | | | JP | WO2019176632 A1 | 11-03-2021 |
| | | | US | 2021080919 A1 | 18-03-2021 |
| | | | WO | 2019176632 A1 | 19-09-2019 |
| JP H07236987 | A | 12-09-1995 | JP | 3534806 B2 | 07-06-2004 |
| | | | JP | H07236987 A | 12-09-1995 |
| JP H11156579 | A | 15-06-1999 | NONE | | |

EPO FORM P0459

For more details about this annex : see Official Journal of the European Patent Office, No. 12/82